# EUROPÄISCHE PATENTSCHRIFT

(11) **EP 2 927 715 B1**
(45) Veröffentlichungstag und Bekanntmachung des Hinweises auf die Patenterteilung: **14.02.2018**
(21) Anmeldenummer: 15000900.9
(22) Anmeldetag: 27.03.2015
(51) Int. Cl.: G02B 5/136, B42D 25/425, G02B 5/10, B42D 25/29, B42D 25/342, B42D 25/355, B44F 1/02, B44F 1/10, G02B 5/13

(54) **SICHERHEITSELEMENT FÜR SICHERHEITSPAPIERE, WERTDOKUMENTE ODER DERGLEICHEN**
SAFETY ELEMENT FOR SECURITY PAPERS, VALUABLE DOCUMENTS OR THE LIKE
SYSTÈME DE SÉCURITÉ POUR PAPIERS DE SÉCURITÉ, DOCUMENTS DE VALEUR OU ANALOGUES

(30) Priorität: 04.04.2014 DE 102014004941
(43) Veröffentlichungstag der Anmeldung: 07.10.2015
(73) Patentinhaber: Giesecke+Devrient Currency Technology GmbH, 81677 München (DE)
(72) Erfinder: Lochbihler, Hans, 80337 München (DE)

(56) Entgegenhaltungen:
- EP-A1- 2 505 377
- WO-A1-2006/087138
- WO-A1-2012/069163
- WO-A1-2014/161673
- DE-A1-102012 014 414

## Beschreibung

Die Erfindung bezieht sich auf ein Sicherheitselement zur Herstellung von Wertdokumenten, wie Banknoten, Schecks oder dergleichen, das eine Oberseite aufweist, die mehrere Mikrobilder bereitstellt.

Die Erfindung bezieht sich weiter auf ein Wertdokument mit einem solchen Sicherheitselement.

Die Erfindung bezieht sich auch auf ein Verfahren zur Herstellung eines Sicherheitselements für Wertdokumente, wie Banknoten, Schecks oder dergleichen, wobei ein Substrat bereitgestellt wird, das eine Oberseite aufweist, und auf der Oberseite mehrere Mikrobilder erzeugt werden.

Solche Mikrobilder werden insbesondere für Moire-Vergrößerungsanordnungen benötigt. Dort ist über den Mikrobildern zu deren Vergrößerung eine Linsenanordnung ausgebildet und jedem Mikrobild eine Linse zugeordnet. Die Mikrobilder werden durch die in einem Raster darüber befindlichen Mikrolinsen so abgebildet, dass ein Betrachter das Mikrobild durch ein Moire-Muster vergrößert wahrnimmt. Moire-Anordnungen, welche sich als Sicherheitselemente, beispielsweise für Banknoten, eignen, dürfen gegenüber der Dicke des Substrates, z. B. Banknotenpapier, nicht merklich auftragen. Daraus ergibt sich eine Limitierung der maximalen Linsengröße, welche wiederum die Größe der darunterliegenden Mikrobilder beschränkt. Die praktikable Fläche eines jeden Mikrobildes liegt zwischen 20 x 20 µm² und 30 x 30 µm². Eine Untergrenze für den Linsendurchmesser und die Größe der Mikrobilder ist durch die Wellennatur des Lichtes gegeben, da mit abnehmenden Strukturgrößen für Linsen und Mikrobilder die Lichtstreuung zunimmt und sich die Abbildungseigenschaften verschlechtern. Auch nimmt mit abnehmender Größe der Mikrobilder der Herstellungsaufwand zu, wenn die Mikrobilder nicht an Detailgenauigkeit verlieren sollen.

Mikrobilder werden aber auch zur möglichst unauffälligen Kennzeichnung von Wertdokumenten eingesetzt, dann natürlich ohne integrierte Vergrößerungsanordnung.

Die Gestaltung von Mikrobildern für Moire-Vergrößerungsanordnungen ist im Stand der Technik bereits in vieler Hinsicht diskutiert.

Aus der DE 102011121588.7 A1 ist ein Sicherheitselement zur Herstellung von Wertdokumenten bekannt, das Mikrobilder, insbesondere für Moire-Magnifier bereitstellt. Die Mikrobilder werden durch eine Mikrokavitätenstruktur erzeugt, die eine Vielzahl nebeneinanderliegender Mikrokavitäten aufweist. Die Mikrokavitäten haben längs der Oberseite eine Aperturgröße zwischen 0,5 µm und 3 µm und sind an ihrer Oberfläche optisch reflektierend oder hochbrechend, so dass an der Oberfläche zumindest teilweise Reflexion stattfindet. Die Mikrobilder sind dadurch erzeugt, dass Mikrokavitäten unterschiedlicher Aspektverhältnisse kombiniert werden. Dieses Prinzip zum Erzeugen eines Sicherheitselementes, von dem die vorliegende Erfindung ausgeht, nutzt die Tatsache, dass die Helligkeit, mit der eine Mikrokavität im Auflicht wirksam ist, vom Aspektverhältnis abhängt. Die Mikrokavitäten werden in der Mikrokavitätenstruktur in einem regelmäßigen Muster angeordnet, wobei im Muster das Aspektverhältnis gemäß dem zu erzeugenden Bild variiert.

Die EP 1434695 B1 beschreibt eine absorbierende Struktur mit einer Periode kleiner als die Lichtwellenlänge. Die Struktur ist als Kreuzgitter mit sinusförmigem Profil aufgebaut.

Die WO 2005/106601 A2 betrifft Moire-Vergrößerungsanordnungen mit Mikrobildern, welche aus antireflektierenden Bereichen und teilweise reflektierenden Bereichen bestehen. Die antireflektierende Fläche wird durch Nanostrukturen mit einer Periode kleiner als 700 nm und einer Tiefe zwischen 150 nm und 350 nm gebildet.

In der EP 1979768 A1 sind Mehrschichtkörper mit Mikrolinsenanordnung erläutert, bei denen Mikrobilder durch Mikrolöcher bzw. durch Bereiche mit unterschiedlicher Opazität erzeugt werden.

In der EP 1182054 B1 werden Retroreflektoren Mikrolinsen zugeordnet, um Abbildungsfehler der Moire-Anordnung zu minimieren.

In der WO 2011/029602 A2 sind gewölbte Mikrobilder vorgesehen, um Abbildungsfehler bei Mikrolinsenanordnungen zu vermeiden. Die Strukturierung der Mikrobilder erfolgt durch diffraktive Reliefstrukturen, wie Beugungsgitter oder Hologramme, Beugungsstrukturen nullter Ordnung, Mattstrukturen oder Mottenaugenstrukturen.

Die WO 2002/101669 A2 beschreibt Mikrobilder, welche durch feine Punkte oder Perforationen gebildet werden.

Die EP 1476317 A1 sowie die US 7468842 B2 beschreiben konkave bzw. konvexe Oberflächen, Bildelemente als Reliefoberflächen, welche mit Farbe gefüllt werden, und "light trap patterns", gebildet durch Sub-Wellenlängenstrukturen, zur Erzeugung von Mikrobildern für Moire-Vergrößerungsanordnungen.

In der WO 2010/048015 A1 schließlich ist ein Verfahren zur Herstellung von Mikrobildern für Moire-Vergrößerungsanordnungen beschrieben, bei welchem eine strahlungsempfindliche Donor-Schicht teilweise abgetragen bzw. übertragen wird, um eine laterale Strukturierung der Schicht zu bewirken.

Aus der DE 102008046128 A1 ist eine Mattstruktur für ein Sicherheitselement bekannt, die eine Vielzahl von Mikroelementen mit jeweils einer lateralen Abmessung unter 50 µm aufweist, wobei mindestens ein Geometrieparameter der Mikroelemente zufällig variiert, um den Matteffekt zu erzeugen. Der Geometrieparameter kann die Tiefe der Mikroelemente sein.

Die WO 2012/069163 beschreibt ein Sicherheitselement, das eine Mikrokavitätenstruktur aufweist, deren Mikrokavitäten als Retroreflektoren ausgebildet sind.

Der Erfindung liegt die Aufgabe zugrunde, die bekannten Mikrobilder, insbesondere für (vergrößernde) Linsenanordnungen, so zu gestalten, dass die Fälschungssicherheit gesteigert wird, indem starker Kontrast bei Variation der Betrachtungsbedingungen möglich wird, ohne den Herstellungsaufwand durch aufwendige Druckverfahren etc. zu steigern.

Diese Aufgabe wird gelöst mit einem Sicherheitselement zur Herstellung von Wertdokumenten, wie Banknoten, Schecks oder dergleichen, gemäß Anspruch 1, das insbesondere eine Oberseite aufweist, die ein Mikrobild bereitstellt, wobei eine Mikrokavitätenstruktur vorgesehen ist, die eine Vielzahl in einem regelmäßigen Muster nebeneinanderliegender Mikrokavitäten aufweist, wobei die Mikrokavitäten jeweils in einer zur Oberseite parallel liegenden Raumrichtung gesehen eine Aperturweite von 0,5 µm bis 3 µm aufweisen, über der Mikrokavitätenstruktur eine einen Farbeffekt erzeugende Beschichtung vorgesehen ist, und das Muster der Mikrokavitäten in Aufsicht auf die Oberseite die Form eines nicht-orthogonalen, zweidimensionalen Gittertyps hat.

Die Aufgabe wird weiter gelöst mit einem Verfahren zur Herstellung eines Sicherheitselements für Wertdokumente, wie Banknoten, Schecks oder dergleichen, gemäß Anspruch 11, wobei insbesondere ein Substrat bereitgestellt wird, das eine Oberseite aufweist, und auf der Oberseite ein Mikrobild erzeugt wird, wobei eine Mikrokavitätenstruktur gebildet wird, die eine Vielzahl nebeneinanderliegender Mikrokavitäten aufweist, die Mikrokavitäten jeweils in einer zur Oberseite parallel liegenden Raumrichtung gesehen mit einer Aperturweite von 0,5 µm bis 3 µm ausgebildet werden, über der Mikrokavitätenstruktur eine einen Farbeffekt erzeugende Beschichtung ausgebildet wird, und die Mikrokavitäten in Aufsicht in Form eines nicht-orthogonalen, zweidimensionalen Gittertyps angeordnet werden.

Die Aufgabe wird schließlich auch mit einem Wertdokument gelöst, das ein erfindungsgemäßes Sicherheitselement aufweist.

Erfindungsgemäß wird für das Mikrobild eine Mikrokavitätenstruktur gebildet, die eine Vielzahl nebeneinanderliegender Mikrokavitäten aufweist, die bevorzugt an ihrer Oberfläche optisch reflektierend sind. Die Bildinformation der Mikrobilder wird in einer Ausführungsform durch das Aspektverhältnis der Mikrokavitäten codiert. In einer anderen Ausführungsform wird die Beschichtung strukturiert.

Das Aspektverhältnis bzw. die Beschichtung wirkt sich auf die Helligkeit und Farbe aus, mit der jede Mikrokavität Licht zurückwirft. Die Helligkeit, mit der jede Mikrokavität Licht zurückwirft, hängt dabei von der Betrachtungsrichtung ab. Die Erfindung geht von der Erkenntnis aus, dass die Ausbildung des Musters an Mikrokavitäten sich dabei wesentlich darauf auswirkt, wie die Betrachtungsbedingungen variiert werden. Nicht-orthogonale, z. B. hexagonal angeordnete Mikrokavitäten zeigen stärkere Kontraste in der reflektierten Intensität als Mikrokavitäten, die herkömmlich in zwei Raumrichtungen senkrecht zueinander periodisch bzw. aperiodisch angeordnet sind.

Dies ist besonders vorteilhaft für die Anwendung als dunklen Hintergrund in Kombination mit LC-Beschichtungen.

Bei einer regelmäßigen Anordnung von Mikrokavitäten treten auch diffraktive Erscheinungen ähnlich wie bei einem Gitter auf. Dabei wird ein Lichtanteil in der Ebene parallel zur Periodizitätsrichtung der Struktur gebeugt. Denn im Gegensatz zu Mottenaugenstrukturen, welche Abstände kleiner als die Lichtwellenlänge haben, findet hier eine Beugung in höhere Beugungsordnungen für sichtbares Licht statt. Die dominierenden Richtungen der Gitterbeugung ergeben sich aus den kürzesten Abständen zu den benachbarten Kavitäten. Bei der orthogonalen Anordnung ergeben sich zwei senkrecht zueinander stehenden Raumrichtungen, in denen die Beugung stattfindet. Bei der hexagonalen Anordnung sind es drei und bei der oktagonalen Anordnung vier Richtungen.

Die Anordnung der Mikrokavitäten im nicht-orthogonalen Gitter, beispielsweise in hexagonaler oder oktagonaler Anordnung, erreicht damit einen stärkeren Kontrast, da der Unterschied zwischen diffuser Lichtstreuung bzw. diffraktiver Wirkung der Mikrokavitäten und spekularer Reflexion besonders groß ist.

Am günstigsten ist die hexagonale Anordnung, da hier die beste Flächenbelegung mit Mikrokavitäten ermöglicht wird. Weiter ist von Vorteil, dass das gebeugte Licht in drei Ebenen dispergiert wird. Vorteilhaft wird die Struktur so angeordnet, dass keine Ebene in Richtung des Betrachters verläuft. Denn in einer normalen Betrachtungssituation fällt das Licht von oben auf die leicht zum Betrachter hin gekippte Probe.

Die Mikrobilder können auch ohne vergrößernde Linsenanordnungen eingesetzt werden, da sie einen hohen Detailreichtum bzw. eine hohe Auflösung zeigen.

Die Mikrokavitäten können in ihrer Öffnung grundsätzlich jede beliebige Form haben, beispielsweise quadratische Aperturen. Es ist aber auch möglich, Mikrokavitäten so zu gestalten, dass deren Kanten den Grenzbereich eines Bildelementes oder Motivs des Mikrobildes bilden. Dadurch können Bildbereiche innerhalb des Mikrobildes scharf gegeneinander abgegrenzt werden, da die Ränder des Bildelementes sehr deutlich sichtbar sind.

Mehrere Mikrobilder werden in einem Muster angeordnet, z. B. passend zu einer darüber liegenden Linsenanordnung. Es ist bevorzugt, dass die Mikrokavitäten sowohl die Motive der Mikrobilder als auch den Motivhintergrund bilden, wobei die Unterschiede durch eine infolge des zu erzeugenden Mikrobildes klar vorgegebene laterale Variation der Beschichtung und/oder des Aspektverhältnisses der Mikrokavitäten realisiert werden. In einer einfachen Ausführung können auch nur die Mikrobilder durch die verschiedenen Arten von Mikrokavitäten gebildet sein, während der Motivhintergrund durch Bereiche mit glatter Oberfläche gebildet wird.

Das Sicherheitselement mit den Mikrokavitäten kann auch zur Erzeugung von Mikrobildern für unskaliert darstellende Anordnungen eingesetzt werden, welche auch ohne Ausnutzung eines Moire-Effektes einen schwer nachzubildenden optischen Effekt bewirken. Hierbei handelt es sich um Anordnungen, bei denen mindestens zwei unterschiedliche Bilder mit einer darüber liegenden Linsenanordnung unskaliert, also weder vergrößert noch verkleinert, dargestellt werden. Die Mikrobilder entsprechen in diesem Fall einem unskalierten Ausschnitt des jeweils darzustellenden Bildes. Dies wird nachfolgend als "unskalierte Darstellung" bezeichnet.

In einer Ausgestaltung der Erfindung ist es vorgesehen, dass die Mikrokavitäten auf mindestens zwei unterschiedlichen Höhenniveaus innerhalb eines dem jeweiligen Bild zugeordneten Mikrobildes liegen. Die Mikrokavitäten der ersten Art werden dabei in jeweils einer anderen Ebene angeordnet als die Mikrokavitäten der zweiten Art. Auf diese Weise kann beispielsweise ein klar erkennbares Wechselbild, ein Bewegungsbild, ein Pumpbild, ein Morphbild oder ein Stereobild erzeugt werden.

Die Geometrie der Mikrokavitäten ist keinesfalls auf rotationssymmetrische Formen oder Formen, die in Draufsicht, also in ihrer Apertur, einen kreisförmigen Umriss haben, beschränkt. Asphären oder Freiformflächen, wie sie z. B. von Lampenreflektoren bekannt sind, können gleichermaßen verwendet werden. Für die Mikrokavitäten ist weiter eine nicht-rotationssymmetrische Apertur möglich.

Für das erfindungsgemäße Herstellungsverfahren kommen insbesondere Direktbelichtungstechniken, z. B. mithilfe eines Laserwriters, infrage. Die Herstellung kann analog zu den bekannten Herstellungsverfahren für Mikrolinsen erfolgen. Das Original der Mikrokavitätenstruktur wird über Direktbelichtung mithilfe eines Laserwriters in ein mit Photolack beschichtetes Substrat geschrieben und anschließend der belichtete Anteil des Photolacks entfernt. Ein belichtetes Original kann anschließend galvanisch abgeformt und somit ein Prägestempel erzeugt werden. Letztendlich wird die Struktur über einen Prägeprozess beispielsweise in UV-Lack auf Folie oder direkt (z. B. per Heißprägen in die Oberfläche der Folie) repliziert. Alternativ kann ein Nanoimprint-Verfahren eingesetzt werden. Aufwendigere Verfahren zur Originalherstellung, wie Elektronenstrahl- oder "Focussed Ion Beam"-Belichtungsverfahren, erlauben eine noch feinere Ausgestaltung der Geometrie der Mikrokavitäten. Diese Herstellungsverfahren bieten viele Gestaltungsmöglichkeiten in der Wahl der Geometrie der Mikrokavitäten. So können ohne Mehraufwand auch nicht-rotationssymmetrische bzw. nichtsphärische Geometrien von Mikrokavitäten mit höherer Genauigkeit als mit dem oben genannten Laser-Direktbelichtungsverfahren realisiert werden.

Anschließend erfolgt eine Beschichtung der Oberfläche. Hierzu kommen unter anderem Elektronenstrahlbedampfen, Sputtern oder thermisches Verdampfen unter Vakuum infrage. Die Beschichtung kann entfallen, wenn die Oberfläche bereits von Haus aus reflektierend ist. Zum Abschluss wird die Struktur zum Schutz vorzugsweise mit einer Deckschicht kaschiert.

Bei konstanter Aperturweite können Mikrokavitäten mit unterschiedlichen Aspektverhältnissen auch allein durch eine Variation der Tiefe der Mikrokavitäten, beispielsweise über eine entsprechende Variation der Belichtungsintensität eines Laserwriters, erzeugt werden. Eine solche Vorgehensweise bietet den Vorteil einer wesentlich einfacheren Datenaufbereitung.

Das Sicherheitselement kann insbesondere als Sicherheitsfaden, Aufreißfaden, Sicherheitsband, Sicherheitsstreifen, Patch, Folienelement oder als Etikett ausgebildet sein. Insbesondere kann das Sicherheitselement transparente Bereiche oder Ausnehmungen überspannen und/oder für eine Sicherheitskarte oder ein Ausweisdokument (z. B. Reisepass) eingesetzt werden.

Das Sicherheitselement kann insbesondere Teil einer noch nicht umlauffähige Vorstufe zu einem Wertdokument sein, das neben dem erfindungsgemäßen Sicherheitselement beispielsweise auch weitere Echtheitsmerkmale (wie z. B. im Volumen vorgesehene Lumineszenzstoffe) aufweisen kann. Unter Wertdokumenten werden hier einerseits das Sicherheitselement aufweisende Dokumente verstanden. Andererseits können Wertdokumente auch sonstige Dokumente und Gegenstände sein, die mit dem erfindungsgemäßen Sicherheitselement versehen werden können, damit die Wertdokumente nicht kopierbare Echtheitsmerkmale aufweisen, wodurch eine Echtheitsüberprüfung möglich ist und zugleich unerwünschte Kopien verhindert werden. Chip- oder Sicherheitskarten, wie z. B. Bank- oder Kreditkarten, sind weitere Beispiele für ein Wertdokument.

Das erfindungsgemäße Herstellungsverfahren kann so ausgebildet werden, dass die beschriebenen bevorzugten Ausbildungen und Ausführungsformen des Sicherheitselementes hergestellt werden.

Erfindungsgemäß ist auf der Mikrokavitätenstruktur eine Beschichtung aufgebracht, welche einen betrachtungswinkelabhängigen Farbeffekt erzeugt. Ein möglicher Aufbau ist der aus der EP 2505377 A1, die eine cholesterische Flüssigkristallschicht verwendet.

Die erfindungsgemäße Ausgestaltung der in nicht-orthogonalen Mustern angeordneten Mikrokavitäten erreicht einen besonders starken Farbeffekt, insbesondere wenn die cholesterischen Flüssigkristallschichten, wie sie aus der EP 2505377 A1 bekannt sind, eingesetzt werden. Dieser ist darin begründet ist, dass die Flüssigkristallschicht blickwinkelabhängig Strahlung aus einem Wellenlängenbereich reflektiert und das restliche Spektrum transmittiert. Wird die transmittierte Strahlung aufgrund eines lichtabsorbierenden Hintergrunds, welchen die Mikrokavitätenstruktur mindestens abschnittsweise bereitstellt, geschluckt, verbleibt nur die reflektierte Strahlung, die einen bunten Farbeindruck hervorruft. Vor einem reflektierenden Hintergrund hingegen wäre der Farbeindruck schwach bis gar nicht wahrnehmbar, da auch der transmittierte Strahlbereich zum Betrachter zurückgeworfen würde, so dass die spektral abhängige Reflexion der Flüssigkristallschicht nicht oder so gut wie nicht sichtbar wäre.

Ferner erlaubt die erfindungsgemäße Struktur gegenüber einem gedruckten schwarzen Untergrund die Ausgestaltung von hochaufgelösten Motiven.

Die Begriffe Vorder- und Rückseite sind in dieser Anmeldung lediglich zur Unterscheidung der beiden Deckflächen des mehrschichtigen Körpers, welcher den Sicherheitsfaden oder das Fensterelement bildet, vorgesehen. Es soll damit keine Vorzugsrichtung für den Sicherheitsfaden bzw. das Fensterelement verbunden sein. Gleiches gilt für die Begriffe "über" und "unter". Sie werden des besseren Verständnisses wegen verwendet und beziehen sich auf eine Orientierung, in der in einer Schnittdarstellung des Fensterelementes oder Sicherheitsfadens die Vorderseite oben liegt. Natürlich soll auch mit diesen Begriffen keine zwangsweise Orientierung des Sicherheitselementes vorgegeben werden.

Die cholesterischen Flüssigkristallschichten benötigen in der Regel eine glatte Unterlage. Die Schichtstruktur des mehrschichtigen Körpers ist deshalb so ausgebildet, dass eine transparente, geprägte Schicht vorgesehen ist, in deren Oberfläche die Mikrokavitätenstruktur eingeprägt ist, und dass eine transparente Deckschicht die Mikrokavitätenstruktur egalisiert, so dass der mehrschichtige Körper auf beiden Deckflächen für die Flüssigkristallschicht eine Unterlage mit der gewünschten Ebenheit aufweist.

Insbesondere bei Fensterelementen ist eine gewisse Festigkeit erforderlich. Diese kann dadurch erreicht werden, dass eine oder mehrere transparente Trägerfolien vorgesehen werden. Diesbezüglich ist es möglich, über der Flüssigkristallschicht und/oder zwischen der Flüssigkristallschicht und der Deckschicht eine transparente Trägerfolie vorzusehen.

Zusätzlich kann auch eine zweite Flüssigkristallschicht auf der Unterseite des Sicherheitselementes ausgebildet werden, um einen beidseitigen Farbeffekt zu erzeugen. Dazu muss die Mikrokavitätenstruktur sowohl an der Vorderseite mindestens abschnittsweise lichtabsorbierend sein als auch an der Rückseite. Hierfür gibt es verschiedene strukturelle Möglichkeiten:

Eine Möglichkeit liegt darin, die Mikrokavitätenstruktur mindestens abschnittsweise symmetrisch zu einer Mittelebene auszugestalten, die zwischen Vorder- und Rückseite liegt. Dann fallen die von der Vorderseite lichtabsorbierenden Abschnitte in der Regel mit den von der Rückseite lichtabsorbierenden Abschnitten zusammen. Man erreicht damit, dass der von der Vorderseite durch die Flüssigkristallschicht erzeugte Farbeffekt im perfekten Passer zum Effekt steht, der von der Rückseite her sichtbar ist.

Eine andere Möglichkeit besteht darin, die Mikrokavitätenstruktur mit ersten und zweiten Bereichen zu versehen, wobei das Profil der Mikrokavitätenstruktur in den ersten Bereichen invers zum Profil der Mikrokavitätenstruktur in den zweiten Bereichen ist. Diese Bauform führt dazu, dass das Motiv des von der Vorderseite wahrnehmbaren Farbeffektes negativ zum Motiv des von der Rückseite erkennbaren Farbeffektes ist, da die erste Flüssigkristallschicht sich immer dort über einem von der Vorderseite lichtabsorbierenden Abschnitt der Mikrokavitätenstruktur befindet, wo die zweite Flüssigkristallschicht gerade über einem nicht oder zumindest schwächer lichtabsorbierenden Abschnitt der Mikrokavitätenstruktur ist.

Für die lichtabsorbierende Wirkung benötigt die Mikrokavitätenstruktur eine Kombination aus geeignetem Profil und Metallisierung. Somit kann man durch laterale Strukturierung eines dieser beiden Elemente des lichtabsorbierenden Effekts in Draufsicht auf die Vorderseite oder Rückseite Motive bilden. Es ist deshalb in einer Weiterbildung bevorzugt, die Metallisierung oder die Mikrokavitätenstruktur mindestens abschnittsweise so zu strukturieren, dass die Strukturierung ein mit dem unbewaffneten Auge erkennbares Muster oder Motiv bereitstellt. Dieses Muster oder Motiv ist ersichtlicherweise sowohl von der Vorderseite als auch von der Rückseite erkennbar, da in den entsprechend strukturierten Bereichen die lichtabsorbierende Wirkung der Mikrokavitätenstruktur ausbleibt oder geschwächt ist und somit der Farbeffekt, den die entsprechende Flüssigkristallschicht erzeugt, ebenfalls ausbleibt oder geschwächt ist - auf jeden Fall unterscheidet er sich aufgrund der Strukturierung der Metallisierung oder der Mikrokavitätenstruktur.
Die Metallisierung bewirkt den lichtabsorbierenden Effekt der Mikrokavitätenstruktur. Eine besonders einfache Realisierung der Metallisierung, die diesen Zweck erfüllt, ist eine Einschichtmetallisierung.

Bei der Lichtstrahlung an Mikrokavitäten kann die gestreute Strahlung in einen spekularen Anteil und einen gestreuten bzw. gebeugten Anteil unterteilt werden. Eine diffuse Lichtstreuung bzw. diffraktive Wirkung der Mikrokavitäten kann für einen Betrachter bei bestimmten Umgebungsbedingungen, insbesondere bei ungerichteten Lichtquellen, wie z. B. Tageslicht, oder bei mehreren Lichtquellen in einem Raum störend sein. Der gewünschte optische Effekt, der von der spekularen Reflexion an den Mikrokavitäten herrührt, wird mit dem gestreuten oder gebeugten Lichtanteil überlagert, was den optischen Eindruck, insbesondere einen Farbkippeffekt, mindert. Es zeigte sich nun, dass bei einer bestimmten Anordnung der Mikrokavitäten dieses Problem erheblich reduziert ist, nämlich immer dann, wenn die Mikrokavitäten in Aufsicht in der Anordnung eines nicht-orthogonalen, zweidimensionalen Gitters liegen. Am günstigsten ist eine hexagonale Anordnung, da diese zugleich die beste Flächenbelegung mit Mikrokavitäten ermöglicht. Bei einer hexagonalen Anordnung ist weiter von Vorteil, dass das gebeugte Licht in drei Ebenen verteilt wird, entsprechend den Symmetrieachsen der Anordnung. Bei allen Betrachtungswinkeln, die nicht mit einer solchen Ebene, die durch die Symmetrieachse und die Senkrechte zum Sicherheitselement definiert ist, zusammenfallen, ist der spekulare Anteil in der gestreuten Strahlung maximal und damit der gewünschte Effekt, insbesondere Farbkippeffekt. Das gebeugte oder gestreute Licht wird entlang der Ebene vom Betrachter weg gerichtet und stört den Eindruck der spiegelnden Reflexion, insbesondere den Farbeindruck, nicht. Dies ist besonders vorteilhaft bei der Anwendung als dunklen Hintergrund.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Insbesondere kann auf das Merkmal der Perforation in allen bislang allgemein und nachfolgend noch im Detail erläuterten Ausführungsformen verzichtet werden.

Nachfolgend wird die Erfindung beispielshalber anhand der beigefügten Zeichnungen, die auch erfindungswesentliche Merkmale offenbaren, noch näher erläutert ist. Es zeigen:
- Fig. 1: eine schematische Darstellung eines Teils eines Sicherheitselementes, nämlich eine Mikrokavitätenstruktur und eine darüber angeordnete Linse,
- Fig. 2: eine schematische Darstellung einer Geometrie, welche für die Mikrokavitätenstruktur der Fig. 1 möglich ist,
- Fig. 3: eine schematische Darstellung ähnlich der Fig. 1,
- Fig. 4: eine schematische Schnittdarstellung durch ein Fensterelement, das unter anderem eine Mikrokavitätenstruktur in einem transparenten Schichtaufbau aufweist,
- Fig. 5 und 6: verschiedene Ausführungsformen für die Mikrokavitätenstruktur der Fig. 1,
- Fig. 7: eine Betrachtungssituation des Sicherheitselementes der Fig. 1,
- Fig. 8: ein Sicherheitselement ähnlich dem der Fig. 1, zusätzlich mit streuender Oberfläche,
- Fig. 9: eine Betrachtungssituation ähnlich der Fig. 5 für das Sicherheitselement der Fig. 6,

- Fig. 10: drei Ansichten für verschiedene Gittertypen, denen gemäß Mikrokavitäten der Mikrokavitätenstruktur des Sicherheitselements der Fig. 1, 3 oder 4 angeordnet werden können,
- Fig. 11: eine schematische Schnittdarstellung zur Verdeutlichung der Lichtstreuung an Mikrokavitäten beim Sicherheitselement der Fig. 3
- Fig. 12: Messwerte für Reflexionen von Mikrokavitäten, die in der Form eines hexagonalen Gittertyps angeordnet sind, und
- Fig. 13: Draufsichten auf hexagonal angeordnete Mikrokavitäten mit Bereichen unterschiedlicher Aspektverhältnisse für zwei verschiedenförmige Aperturformen.

In den Figuren wird nachfolgend ein Sicherheitselement 10 beschrieben, welches Mikrobilder bereitstellt, denen jeweils eine darüber liegende Linse (zur Vergrößerung der) Mikrobilder zugeordnet ist. Es kann sich bei dieser Anordnung um eine bekannte Moire-Vergrößerungsanordnung handeln, wie sie im Stand der Technik für Sicherheitselemente von Wertdokumenten, beispielsweise von Banknoten, bekannt ist. Die Kombination der Mikrobilder mit vergrößernden Linsenanordnungen ist jedoch optional, und die Mikrobilder, wie sie mit dem hier noch beschriebenen Aufbau erzeugt werden, können auch mit einer Linsenanordnung zur unskalierten Darstellung oder ohne Linsenanordnung im Sicherheitselement 10 verwendet werden.

Elemente, die strukturell oder funktionell denen anderer Figuren entsprechen, sind durchgängig mit denselben Bezugszeichen versehen, und für die Beschreibung dieser Elemente wird auf die jeweils vorhergehende Figurenbeschreibung verwiesen.

Den hier beschriebenen Ausführungsformen des Sicherheitselements 10 ist es gemein, dass das Mikrobild durch eine Mikrokavitätenstruktur 1 bereitgestellt wird. Deren einzelne Mikrokavitäten 3 sind so bemessen, insbesondere hinsichtlich ihrer minimalen Aperturweite, dass weder Lichtbeugung noch spekulare Reflexion die beherrschenden Mechanismen beim Zurückwerfen der einfallenden Strahlung sind, sondern eine Rückstreuung. Die Bildinformation wird nicht durch ein Druckbild mit unterschiedlichen Druckfarben erzeugt, sondern durch die Mikrokavitäten 3, welche sich hinsichtlich ihres Aspektverhältnisses und/oder dem Zusammenwirken mit mindestens einer weiteren Schicht unterscheiden. Abhängig davon werfen die einzelnen Mikrokavitäten die einfallende Strahlung mit unterschiedlicher Intensität zurück, so dass die Information jedes Mikrobildes durch das Aspektverhältnis der Mikrokavitäten oder die Struktur der weiteren Schicht codiert ist.

Durch das Aspektverhältnis der Mikrokavitäten kann die Lichtrückstreuung eingestellt werden. Die Helligkeit bei der Strahlungsrückstreuung wird dann nicht alleine durch die Apertur der Mikrokavität eingestellt. Das Aspektverhältnis ist das Verhältnis aus minimaler Aperturweite zu maximaler Tiefe einer Mikrokavität.

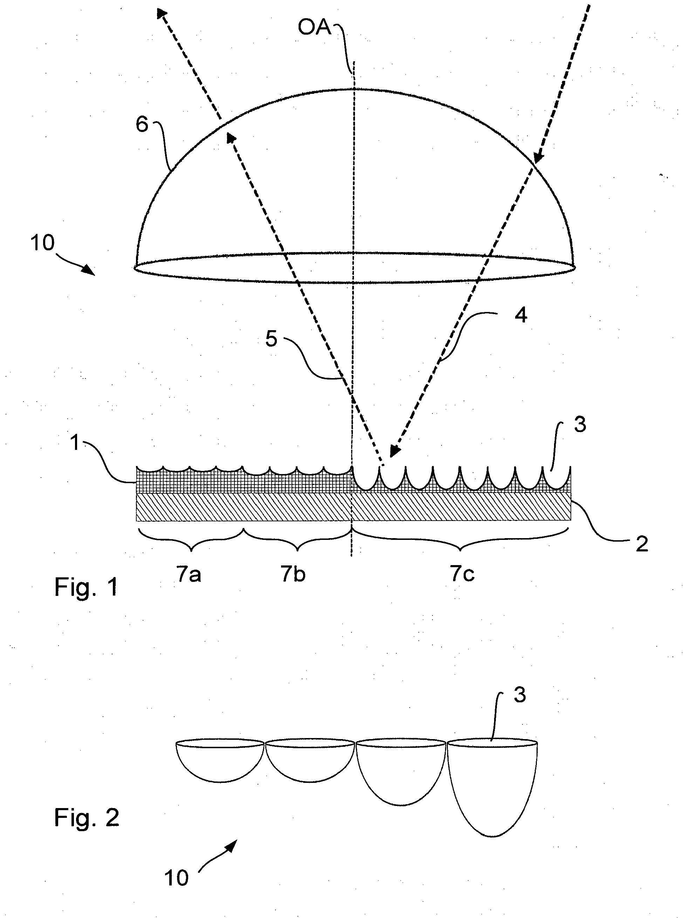

Fig. 1 zeigt schematisch eine Schnittdarstellung durch eine reflektierende Mikrokavitätenstruktur 1, die in einem Substrat 2 gebildet ist. Auf seiner Oberseite weist dieses Substrat 2 mehrere konkave Mikrokavitäten 3 auf, die im gezeigten Fall als sphärische Vertiefungen ausgebildet sind. Die Vertiefungen haben eine reflektierende Oberfläche, beispielsweise durch eine geeignete Beschichtung. Die Mikrokavitäten 3 wirken rückstreuend für einfallendes Licht. Nicht dargestellt ist eine über den Mikrokavitäten 3 angeordnete Schicht, die einen blickwinkelabhängigen Farbeffekt erzeugt.

Über der Mikrokavitätenstruktur 1 ist zudem eine Linse 6 angeordnet, welche ein Mikrobild (vergrößert) abbildet, das durch die Mikrokavitätenstruktur 1 gebildet ist. Ein Teil der einfallenden Strahlung 4 wird dabei an den Mikrokavitäten 3 der Mikrokavitätenstruktur 1 in den dargestellten Raumwinkel gestreut (Strahlung 5) und durch die Linse 6 in die Richtung des Betrachters gelenkt. Im Fall einer Moire-Vergrößerungsanordnung nimmt ein Betrachter durch das Zusammenwirken einer Vielzahl von periodisch angeordneten, farbigen Mikrobildern 9 und Linsen 6 ein vergrößertes Bild wahr. Im Fall einer hier nicht gezeigten unskaliert darstellenden Anordnung zur Erzeugung beispielsweise eines Wechselbilds sieht ein Betrachter bei Betrachtung aus zwei oder mehr unterschiedlichen Betrachtungsrichtungen unterschiedliche Bilder, die dadurch bewirkt sind, dass die Linsen aus den unterschiedlichen Betrachtungsrichtungen verschiedene Mikrobilder abbilden, die unterschiedlichen Bildern zugeordnet sind. Aufgrund des Farbeffektes können die Bilder sich auch (gegebenenfalls nur) farblich unterscheiden.

Das farbige Mikrobild 9 wird in einer Ausführungsform durch die Mikrokavitätenstruktur 1 dadurch erzeugt, dass die nebeneinanderliegenden Mikrokavitäten 3 nicht alle dasselbe Aspektverhältnis haben. In der schematischen Darstellung der Fig. 1 erkennt man drei Bereiche 7a, 7b und 7c, in denen die in Fig. 1 in ihrer Apertur identischen Mikrokavitäten unterschiedlich tief ausgebildet sind. Durch die unterschiedliche Tiefe ändert sich die Helligkeit der zurückgeworfenen Strahlung 5, so dass die drei Bereiche 7a-c unterschiedlich hell erscheinen. Diese Geometrievariation moduliert Bildinhalte des Mikrobildes 9. Alternativ oder zusätzlich kann der Bildinhalt farblich durch laterale Strukturierung der Beschichtung moduliert werden.

Fig. 2 zeigt ein Beispiel möglicher Mikrokavitäten 3. Exemplarisch ist eine Mikrokavitätenstruktur 1 dargestellt, die vier Mikrokavitäten 3 hat. Deren Oberfläche ist jeweils durch die Geometrie eines Kegelschnittes gebildet. Die Aperturen, d. h. die Draufsichten längs der optischen Achse OA der Fig. 1, sind in zwei lateralen Raumrichtungen, d. h. quer zur optischen Achse OA gleich. Die Tiefe und damit das Aspektverhältnis der Mikrokavitäten 3 variiert jedoch lateral. Da die Lichtrückstreuung stark vom Aspektverhältnis abhängt, erscheint die ganz rechte Mikrokavität der Mikrokavitätenstruktur der Fig. 2 dunkler als die ihr links benachbarte usw. Je geringer das Aspektverhältnis (laterale Ausdehnung/Tiefe), d. h. je flacher die Mikrokavität, desto heller ist die Mikrokavität 3.

Die Aperturen der Mikrokavitäten 3 sind natürlich nicht auf rotationssymmetrische Formen beschränkt. Eine quadratische Apertur für die Mikrokavitäten 3 ist z. B. ebenfalls möglich.

Den Mikrokavitäten 3 ist gemein, dass ihre Aperturen, exemplarisch als Quadrat oder Kreis, keine Aperturweite haben, die wesentlich größer als 3 µm ist. Die insgesamt konkave Wölbung der Mikrokavitäten 3 ist nicht auf Halbellipsen oder Halbkreise beschränkt. Es können asphärische Wölbungen oder auch asymmetrische Formen Verwendung finden.

Der optische Effekt der Lichtstreuung an Mikrokavitäten 3 solcher Mikrokavitätenstrukturen 1 hängt kaum von der detaillierten Oberflächenkrümmung ab, da die minimalen Aperturweiten zwischen 0,5 µm und 3 µm liegen. Daher gelten bei der Wechselwirkung mit dem einfallenden Licht nicht mehr zwingend und allein die Gesetze der geometrischen Optik, sondern es findet auch eine Wechselwirkung von elektromagnetischen Wellen statt. Modifikationen in der Wölbung von Mikrokavitäten im Wellenlängen- oder Sub-Wellenlängenbereich haben daher keine signifikante Auswirkung auf das Streuverhalten solcher Mikrokavitäten 3. Dies hat den Vorteil, dass bei der Herstellung der Mikrokavitätenstruktur 1 die Mikrokavitäten 3, welche unterschiedliche Reflexionen zeigen sollen, im Wesentlichen nur in einem Parameter, nämlich im Aspektverhältnis (minimale laterale Ausdehnung zu maximaler Tiefe) variiert werden müssen. Dies erleichtert die Herstellung erheblich, da keine gesteigerten Präzisionsanforderungen an die Profilform gestellt werden.

Die erwähnten Mikrokavitätenstrukturen 1 zeigen eine optische Wirkung durch Rückstreuung. Der Farbeffekt wird z. B. erzeugt, indem die Oberfläche der Mikrokavitätenstruktur 1 mit einer metallischen oder hochbrechenden Schicht belegt ist, so dass zumindest eine Teilreflexion an der Oberfläche der Mikrokavitätenstruktur 1 und damit der Mikrokavitäten 3 stattfindet. Die Schicht wird bevorzugt aufgedampft. Für Bedampfungsverfahren kommen die gängigen Materialien, wie Aluminium, Silber, Gold, Kupfer, Zink, Chrom und Legierungen davon infrage. Hochbrechende Schichten können durch Zinksulfid, Titandioxid oder Silizium erzeugt werden. Derartige Beschichtungen liefern einen besonders guten Hell-/ Dunkel-Kontrast der Mikrokavitäten 3 unterschiedlichen Aspektverhältnisses.

In einer hier nicht gezeigten einfachen Ausgestaltung enthält die Oberfläche des Substrats 2 zusätzlich zur Mikrokavitätenstruktur 1 noch einen glatten bzw. unstrukturierten Bereich. Ein solcher Bereich bildet beispielsweise einen reflektierenden Hintergrund, während die Mikrobilder 9 durch Mikrokavitäten 3 in einer Mikrokavitätenstruktur 1 gebildet werden, die die Bildinformation durch das Aspekt-Verhältnis moduliert.

Die Herstellung der Mikrokavitätenstrukturen 1 erfolgt bevorzugt, wie im allgemeinen Teil der Beschreibung erläutert, durch Laserdirektbelichtung in einem photolithographischen Verfahren. Mikrokavitäten 3 mit Abmessungen bis zu einem minimalen Durchmesser von 0,5 µm können mithilfe eines Laserwriters direkt in Photolack geschrieben werden. Aufgrund der nicht linearen Empfindlichkeit gängiger Photolacke können bei geeigneter Wahl der Belichtungsintensität Strukturen erzeugt werden, die deutlich feiner als der Strahldurchmesser des Lasers sind. Hierbei können auch Strukturen mit Aspektverhältnissen größer als 1 (Tiefe größer als Breite) erzeugt werden. Die Tiefe kann sehr einfach durch die Wahl der Belichtungsintensität variiert werden. Für die Herstellung von Mikrokavitäten mit hoher Genauigkeit können optional auch Elektronenstrahl- bzw. "Focussed Ion Beam"-Belichtungsverfahren infrage kommen. Ein belichtetes Original kann nach dem Entwickeln des Photolacks anschließend galvanisch abgeformt und über einen Prägeprozess in UV-Lack auf Folie oder direkt in die Oberfläche der Folie repliziert werden. Alternativ können auch Nanoimprint-Verfahren eingesetzt werden. In einem letzten Schritt erfolgt die Beschichtung der reflektierenden Oberfläche, z. B. durch Bedampfen. Metallisierte Oberflächen können durch Elektronenstrahlbedampfung, Sputtern oder durch Verdampfen unter Vakuum aufgebracht werden. Anschließend wird die bedampfte Seite zum Schutz mit einer Deckschicht kaschiert.

Bei der Bedampfung des Sicherheitselementes 10 mit Moire-Vergrößerungsanordnung oder unskaliert darstellender Anordnung wird die Prägung der Mikrokavitäten 3 bevorzugt auf der gegenüberliegenden Seite der Folie durchgeführt, auf welcher die Linsen 6 aufgebracht sind.

Die verwendeten Beschichtungen liefern einen Hell-/Dunkel-Kontrast der Mikrokavitäten 3, die unterschiedliches Aspektverhältnis haben.

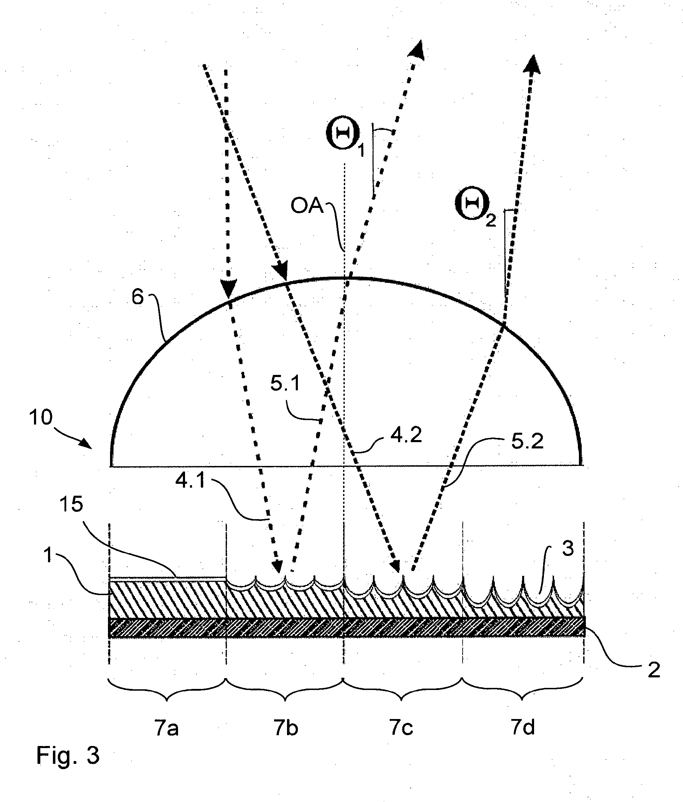

Fig. 3 zeigt ähnlich Fig. 1 schematisch eine Schnittdarstellung durch eine reflektierende Mikrokavitätenstruktur 1, nun mit Darstellung der Beschichtung, die den Farbeffekt erzeugt. Die Mikrokavitätenstruktur 1 hat drei Bereiche 7b bis 7d, in denen Mikrokavitäten 3 unterschiedlicher Tiefe ausgebildet sind. Im Bereich 7a ist keine Mikrokavitätenstruktur gebildet; die Oberfläche ist hier glatt. Die Mikrokavitäten 3 sind mit einer Beschichtung 15 versehen.

Exemplarisch sind in Fig. 3 zur Verdeutlichung zwei unterschiedliche Lichtpfade eingezeichnet. Ein erster Lichtpfad mit Strahlung 4.1 tritt unter einem Winkel θ₁ bezogen auf die Richtung der optischen Achse OA aus, ein zweiter Lichtpfad unter dem Winkel θ₂. Wenn sich ein Betrachter nun an einer Position befindet, in der er eine Betrachtungsrichtung hat, die zum Verlauf der Strahlung gemäß einfallender Strahlung 4.1 und ausfallender Strahlung 5.1, also entsprechend dem Winkel θ₁, führt, nimmt er die Bildinformation des Bereiches 7b war. Verkippt er die Struktur bzw. ändert er seinen Betrachtungswinkel um die Winkeldifferenz θ₁ - θ₂, sieht er die Bildinformation des Bereiches 7c, da die Strahlung gemäß 4.2 und 5.2 verläuft.

Die schematische Darstellung gemäß Fig. 3 verdeutlicht, dass mit dem Sicherheitselement ein Kippeffekt realisiert ist, sobald in der Fläche unter einer Mikrolinse 6 Mikrokavitäten 3 unterschiedlicher Arten, d.h. unterschiedlichen Aspektverhältnisses, vorhanden sind, die sich in ihrem Reflexionsverhalten unterscheiden. Die Mikrobilder können alternativ zur Verwendung mit Linsen auch versteckte Informationen, z. B. Mikroschrift, Seriennummern, Symbole, etc., welche mit einem unbewaffneten Auge nicht aufgelöst werden können, auf einem Wertdokument niederlegen. Die Mikrobilder haben vorteilhafterweise wesentlich kleinere Strukturen als bekannte Lasergravuren.

Natürlich können die beschriebenen Mikrobilder auch ohne die in den Figuren gezeichneten Minilinsen und Vergrößerungsanordnungen verwendet werden. Die Verwendung der Mikrokavitäten erlaubt dann eine sehr feine Strukturierung von Bildern oder Motiven, die mit herkömmlichen Druckverfahren nicht möglich ist.

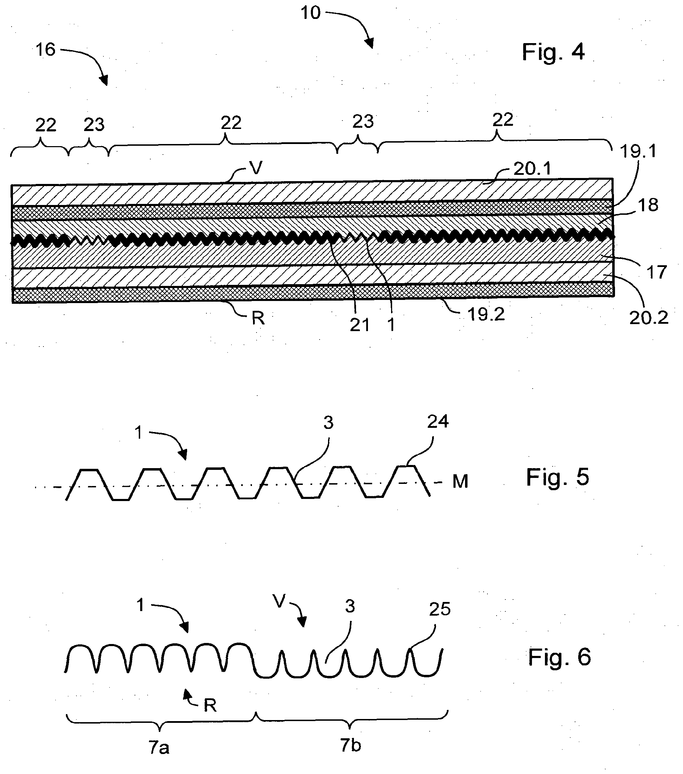

Fig. 4 zeigt in Schnittdarstellung eine weitere Ausführungsform des Sicherheitselementes in Form eines Fensterelementes 16, das von beiden Seiten einen sichtbaren Effekt darstellt. Die nachfolgende Beschreibung gilt gleichermaßen für einen Sicherheitsfaden oder ein anderes Sicherheitselement.

Das Fensterelement 16 weist eine Vorderseite V und eine Rückseite R auf. Auf die oben genannten Ausführungen hinsichtlich dieser Begriffe wird hingewiesen.

Der Kern des Fensterelementes 16 besteht aus dem Substrat 2, umfassend eine transparente oder transluzente Prägelackschicht 17, die von einer transparenten oder transluzenten Decklackschicht 18 abgedeckt ist. Auf die Decklackschicht 18 ist eine erste Flüssigkristallschicht 19.1 aufgebracht. Die cholesterische Flüssigkristallschicht 19.1 erzeugt einen blickwinkelabhängigen Farbeffekt und ist in ihrer Struktur aus dem Stand der Technik bekannt. Es wird diesbezüglich auf die EP 2505377 A1 verwiesen, die in Beispielen 1 bis 4 solche Flüssigkristallschichten erwähnt und sie mit Vergleichsbeispielen 5 und 6 vergleicht. Die besonders relevanten Abschnitte der Veröffentlichung sind die Absätze 200 bis 251.

Eine erste PET-Folie 20.1, die ebenfalls Teil des Substrates 2 ist, wird hinsichtlich Stabilisierung des Fensterelementes 16 unterstützt von einer zweiten PET-Folie 20.2, auf welche die Prägelackschicht 17 aufgebracht ist. Unter der zweiten PET-Folie 20.2 befindet sich eine zweite cholesterische Flüssigkristallschicht 19.2, die hinsichtlich Struktur und Zusammensetzung mit der ersten Flüssigkristallschicht 19.1 identisch sein kann, jedoch auch unterschiedlich ausgebildet sein kann. Die Reihenfolge jeder Flüssigkristallschicht und der zugehörigen PET-Folie können getauscht werden. Die PET-Folien sind optional. Es kann auch nur eine PET-Folie im Substrat 2 verwendet werden.

In die Grenzschicht zwischen Prägelackschicht 17 und Decklackschicht 18 ist die Mikrokavitätenstruktur 1 eingeformt, die zumindest abschnittsweise mit einer Metallisierung 21 versehen ist. Die Prägelackschicht 17 und die Decklackschicht 18 stellen zur Vorderseite V und zur Rückseite R hin jeweils eine ebene Oberfläche bereit, wie sie für eine gute Wirkung der Flüssigkristallschichten 19.1 und 19.2 nötig ist. Zwischen der Prägelackschicht 17 und der Decklackschicht 18 befindet sich hingegen die Mikrokavitätenstruktur 1.

Die Mikrokavitätenstruktur 1 ist so ausgebildet, dass sie in metallisierten Abschnitten von der Vorderseite V her mindestens abschnittsweise lichtabsorbierend ist. Sie ist ebenfalls von der Rückseite R her mindestens abschnittsweise lichtabsorbierend. In der Schnittdarstellung der Fig. 4 ist die Metallisierung 21 lediglich in Abschnitten 22 aufgebracht. Zwischen den Abschnitten 22 liegen Abschnitte 23, in denen keine Metallisierung vorhanden ist. Aufgrund dieser fehlenden Metallisierung ist die Mikrokavitätenstruktur 1 in den Abschnitten 23 nicht lichtabsorbierend, sowohl von der Vorderseite V als auch von der Rückseite R her.

Mit der optionalen Ausgestaltung der Mikrokavitätenstruktur 1 gemäß Fig. 5 ist erreicht, dass die lichtabsorbierenden Abschnitte 22 bezüglich Vorderseite V und Rückseite R in exaktem Passer zueinander stehen. Die Mikrokavitätenstruktur 1 ist als symmetrische Mikrokavitätenstruktur 24 ausgebildet, die sowohl von der Vorderseite V als auch von der Rückseite R her Mikrokavitäten 3 aufweist, welche die eingangs genannten Aperturweiten und Aspektverhältnisse haben. Natürlich ist es möglich, sowohl Strukturweite als auch Aspektverhältnis innerhalb der Mikrokavitätenstruktur 1 zu variieren, um ein zusätzliches Muster in Draufsicht auf die Vorderseite V und die Rückseite R zu erzeugen. Dann kann von der Symmetrie um die Mittelebene M abgewichen werden.

Ein Beispiel für eine asymmetrische Mikrokavitätenstruktur 1 zeigt die Fig. 6. Hier sind exemplarisch erste Bereiche 7a eingezeichnet, in denen die Mikrokavitätenstruktur 1 lediglich von der Rückseite her lichtabsorbierend ist, nicht jedoch von der Vorderseite V her. Die Mikrokavitätenstruktur 1 der Fig. 6 umfasst weiter exemplarisch einen zweiten Bereich 7b, in dem die Mikrokavitätenstruktur 1 von der Vorderseite V her lichtabsorbierend ist, nicht jedoch von der Rückseite R her. Es handelt sich bei der Mikrokavitätenstruktur 1 der Fig. 6 also um eine asymmetrische Mikrokavitätenstruktur 25, deren einzelne Mikrokavitäten 3 dafür sorgen, dass nur von einer Seite Lichtabsorption erreicht ist.

Für die Lichtabsorption ist es natürlich, wie eingangs erwähnt, erforderlich, dass eine geeignete Metallisierung auf der Mikrokavitätenstruktur 1 vorgesehen ist. Die lichtabsorbierenden Eigenschaften können dadurch eingestellt werden, dass die Abschnitte 22 mit Metallisierung 21 und die Abschnitte 23 ohne Metallisierung entsprechend gestaltet werden, um in Draufsicht von Vorder- oder Rückseite ein Muster oder Motiv für das Fensterelement bereitzustellen. Alternativ oder zusätzlich können die lichtabsorbierenden Eigenschaften durch die geeignete Strukturierung einer asymmetrischen Mikrokavitätenstruktur 25 erreicht werden, wie dies die Fig. 6 exemplarisch zeigt. Die beiden Maßnahmen stellen jeweils für sich die Absorptionseigenschaft der Grenzschicht zwischen der Prägelackschicht 17 und der Decklackschicht 18 ein. Die Kombination der beiden Maßnahmen ist gleichermaßen möglich und erlaubt besonders feine Einstellungen hinsichtlich der Struktur der Lichtabsorption und damit des optisch variablen Farbeffektes, der durch die Flüssigkristallschichten 19.1 und 19.2 erzeugt wird und damit eine letztlich besonders feine Motivgestaltung. Natürlich kann die Motivgestaltung auch ausschließlich durch die Variation des Aspektverhältnisses der Mikrokavitäten 3 in der Mikrokavitätenstruktur 1 erreicht werden. Dies ist alternativ oder zusätzlich zur strukturierten Metallisierung möglich.

Die Lichtabsorptionseigenschaften der Grenzschicht zwischen der Prägelackschicht 17 und der Decklackschicht 18 wurden vorstehend lediglich hinsichtlich eines "Alles-oder-Nichts"-Effektes der Lichtabsorption beschrieben. Durch geeignete Strukturwahl für die Mikrokavitätenstruktur 1 und/oder geeignete Beschichtung der Metallisierung 11 lässt sich jedoch ein variierendes Lichtabsorptionsvermögen herstellen, was hochaufgelöste Motive erlaubt.

Natürlich können die dargestellten Maßnahmen kombiniert werden mit bekannten Kopierschutzprinzipien. So ist es beispielsweise möglich, eine zusätzlich strukturierte Magnetschicht vorzusehen, in der eine Magnetstruktur vorgesehen ist. Auch können Fluoreszenzelemente verwendet werden.

Die Strukturierung der Metallisierung kann auf verschiedenste Art und Weise erfolgen. Hierzu hat der Fachmann ein breites Arsenal an Verfahren zur Verfügung, was insbesondere das Ätzen oder das Verwenden von Waschfarben umfasst, um eine vollflächige Metallisierung wieder abschnittsweise zu demetallisieren.

Die Herstellung der Mikrokavitätenstruktur erfolgt bevorzugt durch Laserdirektbelichtung in einem photolithographischen Verfahren. Mikrokavitätenstrukturen mit Abmessungen bis zu einem minimalen Durchmesser von etwa 500 nm können mithilfe eines Laser-Writers direkt in Photolack geschrieben werden. Hierbei können sogar Strukturen mit Aspektverhältnissen größer als 1 erzeugt werden. Die Tiefe der einzelnen Vertiefungen kann sehr einfach durch die Wahl der Belichtungsintensität variiert werden. Zur Herstellung von Mikrokavitäten mit hoher Genauigkeit kommen auch e-Beam bzw. Focussed-Ion-Beam-Belichtungsverfahren infrage.

Ein belichtetes Original kann nach dem Entwickeln des Photolacks anschließend galvanisch abgeformt und über einen Prägeprozess in Prägelack (z. B. UV-Lack) oder durch Heißprägen auf Folie repliziert werden. Im nächsten Schritt erfolgt eine metallische Beschichtung der Oberfläche. Metallisierte Oberflächen können beispielsweise durch Elektronenstrahlbedampfen, Sputtern oder durch thermisches Verdampfen unter Vakuum hergestellt werden. Als Beschichtungsmaterial eignen sich alle gängigen Metalle mit hoher Reflexion im sichtbaren Bereich, besonders aber Al, Ag, Au, Ni, Cr. Anschließend wird die beschichtete Seite mit der Decklackschicht überzogen oder mit einer Deckschicht kaschiert.

Die Herstellung erfolgt oft mit photolithographischen Verfahren, insbesondere mit einer e-Beam-Anlage. Jedoch sind auch weitere bekannte Verfahren, wie Interferenzlithographie oder mechanisches Ritzen, denkbar.

Die laterale Ausgestaltung der Oberfläche und damit die Motiverzeugung erfolgt in einem anschließenden photolithographischen Belichtungsprozess, z. B. durch direktes Laserstrahlschreiben. Hierzu wird die homogene Gitterfläche bzw. Fläche von Mottenaugenstrukturen mit Photolack eingeebnet. Durch eine anschließende Belichtung des Photolacks wird die Struktur in den gewünschten Bereichen wieder freigelegt.

Das so hergestellte Original kann nun durch Standardverfahren kopiert und vervielfältigt werden. Nach der Herstellung eines Prägezylinders, kann die Struktur in einem kontinuierlichen Prozess auch auf eine Folie geprägt werden. Hier bei kommen Heißprägen oder Nano-Casting in Prägelack (z. B. UV-Lack) infrage. Schließlich kann die geprägte Folie metallisch beschichtet werden. Die gängigen Bedampfungsverfahren sind wieder Elektronenstrahlbedampfen, thermisches Verdampfen bzw. Sputtern. Hier finden die bereits oben erwähnten Metalle Verwendung. Letztendlich wird die metallisierte Struktur mit der Decklackschicht überzogen oder mit einer Deckfolie kaschiert.

Ein lokal unterschiedliches Absorptionsvermögen der Grenzschicht zwischen der Prägelackschicht 17 und der Decklackschicht 18 kann durch geeignete Strukturierung der Mikrokavitätenstruktur 1 und/oder der Metallisierung 21 einfach hergestellt werden, wobei eine automatische Passerung zwischen Vorder- und Rückseite V, R, d. h. des Motivs mit dem Farbeffekt, den die erste Flüssigkristallschicht 19.1 zeigt, und des Motivs mit dem Farbeffekt, den die zweite Flüssigkristallschicht 19.2 zeigt, erreicht ist.

Die Flüssigkristallschicht kann mit weiteren Schichten kombiniert werden. Optisch anisotrope Schichten sollten, um ihre Wirkung (Nachweis durch Benutzung eines geeigneten Polarisationsfilters oder von polarisiertem Licht) optimal zu entfalten, eine für den jeweils eingesetzten Reflektor geeignete Doppelbrechung aufweisen. Wenn in der Flüssigkristallschicht nematische Flüssigkristalle auf cholesterischen Flüssigkristallen eingesetzt werden, ist eine λ/2-Schicht von Vorteil. In Bereichen mit einer einfachen Metallisierung ist eine λ/4-Schicht ideal. Eine zusätzliche cholesterische Flüssigkristallschicht über einer hochreflektiven Metallisierung ist nicht von Vorteil und kann beim Polarisationseffekt/Kontrast von Nachteil sein. Daher ist auch eine Variante interessant, bei der die Flüssigkristallschicht zunächst nematische Flüssigkristalle aufweist, wobei die Schichtdicke über die Fläche so variiert wird, dass je nach voraussichtlich über dem jeweiligen Bereich später liegenden Reflektor die Schichtdicke angepasst wird. Anschließend werden cholesterische Flüssigkristalle über die nematische Flüssigkristallschicht gedruckt, wobei die Bereiche, die später über einem hochreflektiven Untergrund liegen, bevorzugt ausgespart werden. Diese zusätzliche nematische Flüssigkristallschicht kann sowohl für die erste Flüssigkristallschicht 19.1 als auch für die zweite Flüssigkristallschicht 19.2 zusätzlich zur dort vorgesehenen cholesterischen Flüssigkristallschicht verwendet werden.

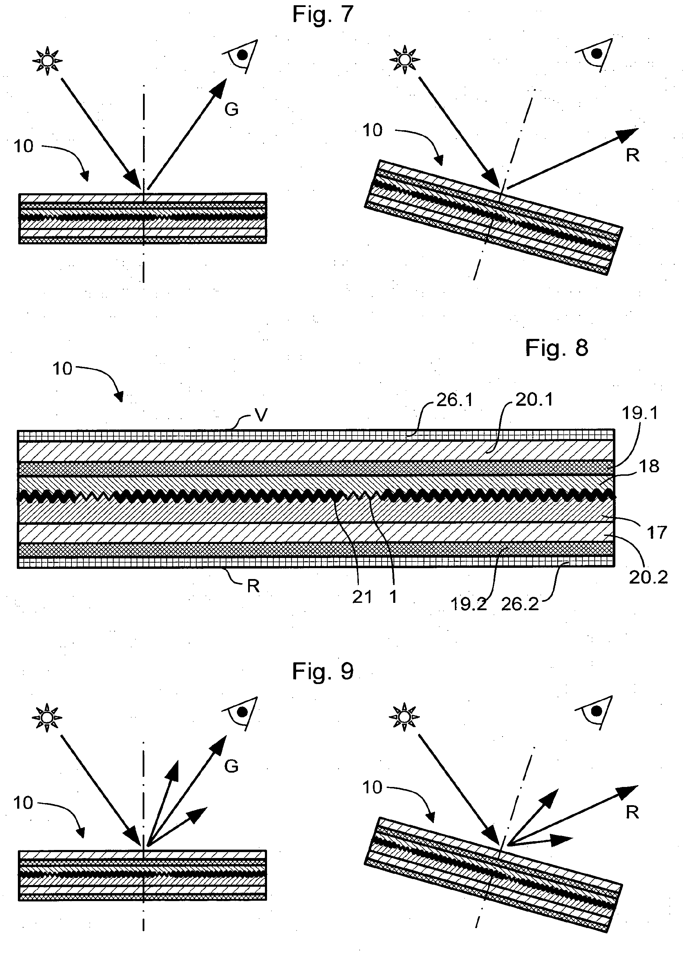

Optisch variable Elemente, wie Flüssigkristallschichten, zeigen wunschgemäß eine unterschiedliche Farbe für verschiedene Betrachtungswinkel. In der Praxis dominiert eine Raumrichtung des einfallenden Lichtes, wie bei Raumbeleuchtung oder Tageslicht, insbesondere bei Sonnenschein. Fig. 7 zeigt eine solche typische Betrachtungssituation des Sicherheitselementes bei einer gerichteten Lichtquelle. Wenn ein Betrachter das Sicherheitselement im Glanzwinkel betrachtet, sieht er das an den Bragg-Ebenen der Flüssigkristallschicht 19.1 reflektierte Licht als grüne Farbe. Dreht er das Sicherheitselement, erscheint es dunkel, da die spiegelnde Reflexion nicht mehr zum Auge des Betrachters gelangt. Um die an den Bragg-Ebenen reflektierte rote Farbe zu sehen, muss der Beobachter das Sicherheitselement 10 lateral so verschieben, dass der in der Darstellung eingezeichnete Strahlengang auf sein Auge trifft.

Der visuelle Eindruck des Sicherheitselementes ist in einer optionalen Weiterbildung verbessert, indem eine erste lichtstreuende Schicht 26.1 oberhalb der ersten Flüssigkristallschicht 19.1 vorgesehen ist. Diese Schicht kann als raue Reliefoberfläche oder auch als Streumedium ausgelegt sein. Sie fächert transmittiertes Licht um etwa 5° bis 10° auf. Eine solche Anordnung ist in Fig. 8 dargestellt, die auch eine zweite lichtstreuende Schicht 27.2 unter der zweiten Flüssigkristallschicht 19.2 hat. Natürlich kann das lichtstreuende Medium auch nur auf einer Seite vorgesehen werden. Aufgrund des Streumediums sieht ein Betrachter, anders als in der Situation der Fig. 7, bereits nach einer Drehung die zweite Farbe als Streuanteil des einfallenden Lichtes (siehe Fig. 9). Dies erhöht die Erkennungswahrscheinlichkeit des Sicherheitselementes und ist daher vorteilhaft bei der Verwendung als Sicherheitsmerkmal.

Die LC-Schicht kann auch nur auf einer Seite vorgesehen werden.

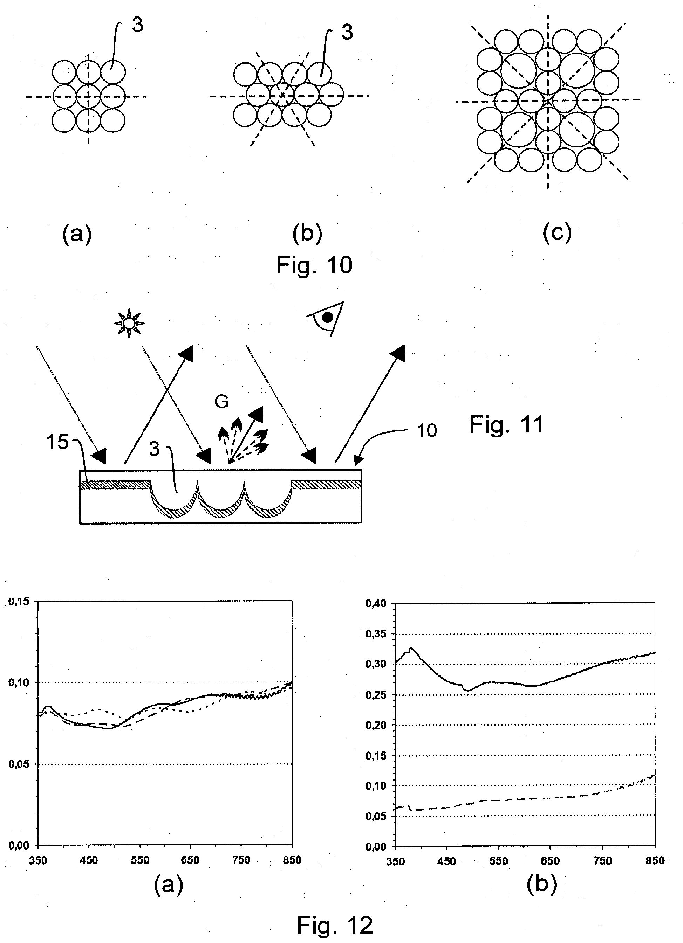

Fig. 10 zeigt in drei Darstellungen a-c die Draufsicht auf verschiedene Anordnungen von Mikrokavitäten 3 mit unterschiedlichen Symmetrien. Fig. 10a zeigt die Anordnung in einem schon länger verwendeten orthogonalen Gittertyp, Fig. 10b in einem hexagonalen Gittertyp und Fig. 10c das Beispiel eines oktagonalen Gittertyps. Die dominierenden Richtungen der Beugung von einfallender Strahlung ergeben sich aus den kürzesten Abständen benachbarter Kavitäten.

Bei der schon länger verwendeten orthogonalen Anordnung gemäß Fig. 10a ergeben sich zwei senkrecht zueinander stehende Raumrichtungen, in denen die Beugung/Streuung stattfindet. Bei der hexagonalen Anordnung sind es drei und bei der oktagonalen Anordnung vier Richtungen. Durch die höhere Anzahl an Richtungen der hexagonalen und oktagonalen Anordnung haben ungerichtete Lichtquellen oder mehrere Lichtquellen in einem Raum einen sehr viel weniger störenden Einfluss, als bei der orthogonalen Anordnung gemäß Fig. 10a. Senkrecht zur Zeichenebene stehende Ebenen durch die veranschaulichten Symmetrieachsen sind diejenigen Ebenen, in denen das gebeugte Licht mit besonders hoher Intensität dispergiert wird. Bei einer normalen Betrachtungssituation fällt das Licht von oben auf die leicht zum Betrachter hin gekippte Oberfläche. Im Fall der Fig. 10b wird das Licht dann seitlich vom Betrachter weggebeugt, und stört einen Farbeindruck der spiegelnden Reflexion nicht, wie Fig. 11 zeigt.

Dies verdeutlicht die Fig. 12 weiter. Die Kurven der Fig. 12 sind für eine Mikrokavität mit einer Apertur von 0,6 µm Durchmesser gewonnen. Die Tiefe der Mikrokavitäten beträgt 0,4 µm, woraus sich ein Aspektverhältnis von 2/3 ableitet. Die Oberfläche der Struktur ist mit 80 nm Aluminium überzogen und die Mikrokavitäten liegen in der Anordnung eines hexagonalen Gittertyps, also in der Anordnung gemäß Fig. 10b.

Die linke Darstellung, Fig. 12a, zeigt die spekulare, wellenlängenabhängige Reflexion bei unterschiedlichen Glanzwinkeln, nämlich 8° (durchgezogen gezeichnet), 15° (lang gestrichelt eingetragen) und 30° (kurz gestrichelt eingetragen). Fig. 12b zeigt die Reflexion bei 8° aufgeteilt in Gesamtreflexion (durchgezogen eingezeichnet) und spekulare Reflexion (gestrichelt eingetragen). Die spekulare Reflexion liegt im Mittel bei etwa 7% und ist weitgehend unabhängig vom Glanzwinkel. Jedoch liegt die gesamte Reflexion im sichtbaren Spektralbereich im Mittel bei etwa 27°. Der diffuse Anteil von etwa 20% wird in unterschiedliche Richtungen gebeugt oder gestreut. Nur ein kleiner Anteil davon fällt auf den Betrachter und beeinflusst die Farbwahrnehmung, die von der Flüssigkristallschicht bewirkt wird.

Die hexagonale Anordnung von Mikrokavitäten kann benutzt werden, um hochaufgelöste Motive kontrastrecht zu gestalten. Durch die Tiefe der Mikrokavitäten bei gleicher Apertur oder allgemein durch das Aspektverhältnis der Mikrokavitäten, kann im Zusammenhang mit der den Farbeffekt erzeugenden Schicht, z. B. der Colour-Shift-Schicht der Fig. 3 oder der LC-Schicht der Fig. 4 der Farbeindruck modifiziert werden.

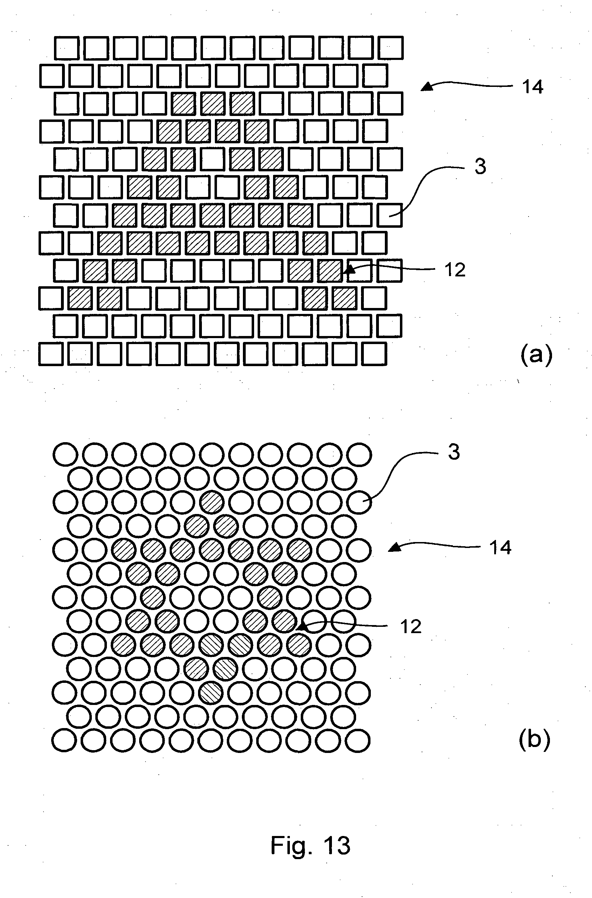

Fig. 13 zeigt exemplarisch in einem Muster 14 gemäß einem hexagonalen Gittertyp angeordnete Mikrokavitäten 3 mit unterschiedlichen Aperturen. In Fig. 13a sind die Aperturen kreisförmig, in Fig. 13b quadratisch. Die schraffierten Aperturen gehören Mikrokavitäten 3 mit einem höheren Aspektverhältnis, also einer höheren Tiefe, als die Aperturen ohne Schraffur. Die tieferen Mikrokavitäten 3 erzeugen eine starke Absorptionswirkung, die vergleichsweise flacheren Mikrokavitäten streuen dagegen einfallendes Licht stärker. Auf diese Weise kann ein Motiv 12 erzeugt werden. Natürlich können die Mikrokavitäten 3 auch mit unstrukturierten, d. h. glatten Flächenelementen eines Mikrobildes 12 kombiniert werden.

**Bezugszeichenliste**

| | | | |
|---|---|---|---|
| 1 | Mikrokavitätenstruktur | 26.1 | erste lichtstreuende |
| 2 | Substrat | | Schicht |
| 3 | Mikrokavität | 27.1 | zweite lichtstreuende |
| 4; 4.1, 4.2 | Strahlung | | Schicht |
| 5,5.1,5.2 | Strahlung | V | Vorderseite |
| 6 | Linse | R | Rückseite |
| 7a, b, c, d | Bereich | M | Mittelebene |
| 8 | Richtung | OA | optische Achse |
| 9 | Mikrobild | θ₁, θ₂ | Winkel |
| 10 | Sicherheitselement | | |
| 11 | Pixel | | |
| 12 | Motiv | | |
| 13 | Rand | | |
| 14 | Muster | | |
| 15 | Beschichtung | | |
| 16 | Fensterelement | | |
| 17 | Prägelackschicht | | |
| 18 | Decklackschicht | | |
| 19.1, 19.2 | erste, zweite Flüssigkristallschicht | | |
| 20.1, 20.2 | erste, zweite PET-Folie | | |
| 21 | Metallisierung | | |
| 22, 23 | Abschnitt | | |
| 24 | symmetrische Mikrokavitätenstruktur | | |
| 25 | asymmetrische Mikrokavitätenstruktur | | |

## Patentansprüche

1. Sicherheitselement zur Herstellung von Wertdokumenten, wie Banknoten, Schecks oder dergleichen, das eine Oberseite (V) aufweist, die ein Mikrobild (12) bereitstellt, wobei
- das Sicherheitselement einen mehrschichtigen Körper mit der Oberseite (V) und einer Rückseite (R) hat, der aufweist:
- - eine transparente, geprägte Schicht (17), in deren Oberfläche eine Mikrokavitätenstruktur (1) eingeprägt ist,
- - eine Metallisierung (21), die mindestens auf Teilen der Oberfläche der geprägten Schicht (17) aufgebracht ist,
- die Mikrokavitätenstruktur (1) eine Vielzahl in einem regelmäßigen Muster (14) nebeneinanderliegender Mikrokavitäten (3) aufweist, wobei das Muster (14) der Mikrokavitäten (3) in Aufsicht auf die Oberseite die Form eines nicht-orthogonalen, zweidimensionalen Gittertyps hat und die Mikrokavitäten (3) jeweils in einer zur Oberseite parallel liegenden Raumrichtung gesehen eine Aperturweite von 0,5 µm bis 3 µm aufweisen,
**dadurch gekennzeichnet, dass**
- auf die Oberfläche und über die Metallisierung (21) eine transparente Deckschicht (18) aufgebracht ist, welche die Mikrokavitätenstruktur (1) egalisiert,
- über der Mikrokavitätenstruktur (1) eine einen Farbeffekt erzeugende Beschichtung (15) in Form einer über der Deckschicht (18) aufgebrachten, ersten Flüssigkristallschicht (19.1),vorgesehen ist und
- die Mikrokavitätenstruktur (1) so ausgebildet ist, dass sie von der Vorderseite (V) mindestens abschnittsweise lichtabsorbierend ist.

2. Sicherheitselement nach Anspruch 1, **dadurch gekennzeichnet, dass** der Gittertyp hexagonal oder oktagonal ist.

3. Sicherheitselement nach Anspruch 1 oder 2, **dadurch gekennzeichnet, dass** unter der geprägten Schicht (17) eine zweite Flüssigkristallschicht (19.2) vorgesehen ist.

4. Sicherheitselement nach einem der obigen Ansprüche, **dadurch gekennzeichnet, dass** über der ersten Flüssigkristallschicht (19.1) oder zwischen der ersten Flüssigkristallschicht (19.1) und der Deckschicht (18) eine erste transparente Trägerfolie (20.1) angebracht ist.

5. Sicherheitselement nach einem der obigen Ansprüche, **dadurch gekennzeichnet, dass** für das Mikrobild (12) Mikrokavitäten (3) mindestens einer ersten und einer zweiten Art vorhanden sind, die sich hinsichtlich eines Aspektverhältnisses der Mikrokavitäten (3) unterscheiden, wodurch das Mikrobild (12) durch die mindestens zwei verschiedenen Arten von Mikrokavitäten (3) strukturiert ist.

6. Sicherheitselement nach einem der Ansprüche 1 bis 5, **dadurch gekennzeichnet, dass** die Mikrokavitätenstruktur (1) ein Profil aufweist, das mindestens abschnittsweise symmetrisch zu einer Mittelebene (M) ist, die zwischen Vorder- und Rückseite (V, R) liegt.

7. Sicherheitselement nach einem der Ansprüche 1 bis 6, **dadurch gekennzeichnet, dass**
- die Mikrokavitätenstruktur (1) erste und zweite Bereiche (7a, 7b) aufweist, wobei ein Profil der Mikrokavitätenstruktur (1) in den ersten Bereichen (7a) invers zum Profil der Mikrokavitätenstruktur (1) in den zweiten Bereichen (7b) ist und/oder
- über der Flüssigkristallschicht eine lichtstreuende Schicht (26.1; 26.2) vorgesehen ist.

8. Sicherheitselement nach einem der Ansprüche 1 bis 7, **dadurch gekennzeichnet, dass** die Beschichtung (15) oder das Aspektverhältnis durch die Mikrokavitätenstruktur (1) mindestens abschnittsweise lateral so strukturiert ist, dass die Strukturierung ein mit dem unbewaffneten Auge erkennbares Muster oder Motiv (12) bereitstellt.

9. Sicherheitselement nach einem der Ansprüche 1 bis 8, **dadurch gekennzeichnet, dass** die Beschichtung (10) eine Einschichtmetallisierung ist.

10. Wertdokument mit einem Sicherheitselement (10) nach einem der Ansprüche 1 bis 9.

11. Verfahren zur Herstellung eines Sicherheitselements (10) für Wertdokumente, wie Banknoten, Schecks oder dergleichen, wobei ein Substrat (2) bereitgestellt wird, das eine Oberseite aufweist, und auf der Oberseite (V) ein Mikrobild (12) erzeugt wird, wobei
- ein mehrschichtiger Körper mit der Oberseite (V) und einer Rückseite (R) hergestellt wird und dazu folgende Schritte ausgeführt werden:
- - eine transparente Schicht (17) wird bereitgestellt und in deren Oberfläche die Mikrokavitätenstruktur (1) eingeprägt,
- - mindestens auf Teile der Oberfläche der geprägten Schicht (17) wird eine Metallisierung (21) aufgebracht,
- die Mikrokavitätenstruktur (1) mit einer Vielzahl nebeneinanderliegender Mikrokavitäten (3) gebildet wird, wobei die Mikrokavitäten (3) in Aufsicht in Form eines nicht-orthogonalen, zweidimensionalen Gittertyps angeordnet werden und die Mikrokavitäten (3) jeweils in einer zur Oberseite parallel liegenden Raumrichtung gesehen mit einer Aperturweite von 0,5 µm bis 3 µm ausgebildet werden,
**dadurch gekennzeichnet, dass**
- auf die Oberfläche und über die Metallisierung (21) eine transparente Deckschicht (18), welche die Mikrokavitätenstruktur (1) egalisiert, aufgebracht wird,
- über der Deckschicht (18) wird eine erste Flüssigkristallschicht (19.1) als eine einen Farbeffekt erzeugende Beschichtung (15) aufgebracht und
- die Mikrokavitätenstruktur (1) so gestaltet wird, dass sie von der Vorderseite (V) her mindestens abschnittsweise lichtabsorbierend ist.

12. Verfahren nach Anspruch 11, **dadurch gekennzeichnet, dass** der Gittertyp hexagonal oder oktagonal ist.

13. Verfahren nach Anspruch 11 oder 12, **dadurch gekennzeichnet, dass** unter der geprägten Schicht (17) eine zweite Flüssigkristallschicht (19.2) vorgesehen wird.

14. Verfahren nach einem der Ansprüche 11 bis 13, **dadurch gekennzeichnet, dass** für das Mikrobild (12) Mikrokavitäten (3) mindestens einer ersten und einer zweiten Art vorgesehen werden, welche sich durch ein Aspektverhältnis der Mikrokavitäten (3) unterscheiden, wodurch das Mikrobild (12) durch die mindestens zwei verschiedenen Arten von Mikrokavitäten (3) strukturiert wird.

15. Verfahren nach einem der Ansprüche 11 bis 14, **dadurch gekennzeichnet, dass** über der ersten Flüssigkristallschicht (19.1) eine erste transparente Trägerfolie (20.1) angebracht oder vor dem Aufbringen der ersten Flüssigkristallschicht (19.1) auf die Deckschicht (18) eine erste transparente Trägerfolie (20.1) angebracht wird.

16. Verfahren nach einem der Ansprüche 11 bis 15, **dadurch gekennzeichnet, dass**
- die Mikrokavitätenstruktur (1) mit einem Profil versehen wird, das mindestens abschnittsweise symmetrisch zu einer Mittelebene (M), die zwischen Vorder- und Rückseite (V, R) liegt, ausgebildet wird und/oder
- die Mikrokavitätenstruktur (1) mit ersten und zweiten Bereichen (7a, 7b) ausgebildet wird, die zueinander inverses Profil haben und/oder
- über der Flüssigkristallschicht eine lichtstreuende Schicht (26.1; 26.2) angeordnet wird.

17. Verfahren nach einem der Ansprüche 11 bis 16, **dadurch gekennzeichnet, dass** die Beschichtung (15) oder die Mikrokavitätenstruktur (1) mindestens abschnittsweise so strukturiert wird, dass ein mit dem unbewaffneten Auge erkennbares Muster oder Motiv bereitgestellt wird, wobei bevorzugt eine flächige Metallisierung aufgebracht und dann abschnittsweise wieder entfernt wird.

18. Verfahren nach einem der Ansprüche 11 bis 17, **dadurch gekennzeichnet, dass** die Beschichtung (15) als eine Einschichtmetallisierung aufgebracht wird.

## Claims

1. Security element for producing valuable documents such as bank notes, cheques or the like, said security element having an upper side (V) providing a micro-image (12), wherein
- the security element has a multi-layer body with the upper side (V) and a rear side (R), said body having:
-- a transparent, embossed layer (17), into the surface of which a micro-cavity structure (1) has been impressed,
-- a metallization (21) which is applied at least to parts of the surface of the embossed layer (17),
- the micro-cavity structure (1) has a multiplicity of micro-cavities (3) lying next to one another in a regular pattern (14), wherein the pattern (14) of the micro-cavities (3) has the form of a non-orthogonal two-dimensional lattice type in a top view of the upper side and the micro-cavities (3) each have an aperture dimension of 0.5 µm to 3 µm, as seen in the spatial direction lying parallel to the upper side,
**characterized in that**
- a transparent capping layer (18) which levels the micro-cavity structure (1) is applied on the surface and over the metallization (21),
- a coating (15) that produces a colour effect, in the form of a first liquid crystal layer (19.1) that has been applied over the capping layer (18), is provided over the micro-cavity structure (1) and
- the micro-cavity structure (1) is embodied in such a way that it is light absorbing, at least in sections, from the front side (V).

2. Security element according to Claim 1, **characterized in that** the lattice type is hexagonal or octagonal.

3. Security element according to Claim 1 or 2, **characterized in that** a second liquid crystal layer (19.2) is provided under the embossed layer (17).

4. Security element according to any one of the preceding claims, **characterized in that** a first transparent carrier film (20.1) is applied over the first liquid crystal layer (19.1) or between the first liquid crystal layer (19.1) and the capping layer (18).

5. Security element according to any one of the preceding claims, **characterized in that** micro-cavities (3) of at least a first type and a second type are present for the micro-image (12), said micro-cavities differing in respect of an aspect ratio of the micro-cavities (3), as a result of which the micro-image (12) is structured by the at least two different types of micro-cavities (3) .

6. Security element according to any one of Claims 1 to 5, **characterized in that** the micro-cavity structure (1) has a profile which, at least in sections, is symmetrical in relation to a centre plane (M) that lies between the front side (V) and rear side (R).

7. Security element according to any one of Claims 1 to 6, **characterized in that**
- the micro-cavity structure (1) has first and second regions (7a, 7b), wherein a profile of the micro-cavity structure (1) in the first regions (7a) is inverted to the profile of the micro-cavity structure (1) in the second regions (7b) and/or
- a light-scattering layer (26.1; 26.2) is provided over the liquid crystal layer.

8. Security element according to any one of Claims 1 to 7, **characterized in that** the coating (15) or the aspect ratio through the micro-cavity structure (1) is laterally structured, at least in sections, in such a way that the structuring provides a pattern or motif (12) that is identifiable with the naked eye.

9. Security element according to any one of Claims 1 to 8, **characterized in that** the coating (10) is a single layer metallization.

10. Valuable document having a security element (10) according to any one of Claims 1 to 9.

11. Method for producing a security element (10) for valuable documents, such as bank notes, cheques or the like, wherein a substrate (2) is provided, said substrate having an upper side, and a micro-image (12) is produced on the upper side (V), wherein
- a multi-layer body with the upper side (V) and a rear side (R) is produced and the following steps are carried out to this end:
-- a transparent layer (17) is provided and the micro-cavity structure (1) is impressed into the surface thereof,
-- a metallization (21) is applied to at least parts of the surface of the embossed layer (17),
- the micro-cavity structure (1) is formed with a multiplicity of micro-cavities (3) lying next to one another, wherein the micro-cavities (3), in a top view, are arranged in the form of a non-orthogonal, two-dimensional lattice type and the micro-cavities (3) are respectively embodied with an aperture dimension of 0.5 µm to 3 µm, as seen in the spatial direction lying parallel to the upper side,
**characterized in that**
- a transparent capping layer (18) which levels the micro-cavity structure (1) is applied on the surface and over the metallization (21),
- a first liquid crystal layer (19.1), as a coating (15) producing a colour effect, is applied over the capping layer (18) and
- the micro-cavity structure (1) is designed in such a way that it is light absorbing, at least in sections, from the front side (V).

12. Method according to Claim 11, **characterized in that** the lattice type is hexagonal or octagonal.

13. Method according to Claim 11 or 12, **characterized in that** a second liquid crystal layer (19.2) is provided under the embossed layer (17).

14. Method according to any one of Claims 11 to 13, **characterized in that** micro-cavities (3) of at least a first type and a second type are provided for the micro-image (12), said micro-cavities differing in respect of an aspect ratio of the micro-cavities (3), as a result of which the micro-image (12) is structured by the at least two different types of micro-cavities (3).

15. Method according to any one of Claims 11 to 14, **characterized in that** a first transparent carrier film (20.1) is applied over the first liquid crystal layer (19.1) or a first transparent carrier film (20.1) is applied on the capping layer (18) before the application of the first liquid crystal layer (19.1).

16. Method according to any one of Claims 11 to 15, **characterized in that**
- the micro-cavity structure (1) is provided with a profile which, at least in sections, is embodied symmetrically in relation to a centre plane (M) that lies between the front side (V) and rear side (R) and/or
- the micro-cavity structure (1) is embodied with first and second regions (7a, 7b) which have an inverted profile in relation to one another and/or
- a light-scattering layer (26.1; 26.2) is arranged over the liquid crystal layer.

17. Method according to any one of Claims 11 to 16, **characterized in that** the coating (15) or the micro-cavity structure (1) is structured, at least in sections, in such a way that a pattern or motif that is identifiable with the naked eye is provided, wherein a planar metallization is preferably applied and then removed again in sections.

18. Method according to any one of Claims 11 to 17, **characterized in that** the coating (15) is applied as a single layer metallization.

## Revendications

1. Élément de sécurité destiné à la création de documents de valeur, comme des billets de banque, des chèques ou similaires, lequel possède un côté supérieur (V) qui fournit une micrographie (12),
- l'élément de sécurité comprenant un corps multicouche avec le côté supérieur (V) et un côté inférieur (R), lequel possède :
-- une couche gaufrée (17) transparente dans la surface de laquelle est gravée une structure à microcavités (1),
-- une métallisation (21) qui est appliquée au moins sur des parties de la surface de la couche gaufrée (17),
- la structure à microcavités (1) possédant une pluralité de microcavités (3) juxtaposées en un modèle régulier (14), le modèle (14) des microcavités (3), vue sur le côté supérieur, ayant la forme d'un type de grille bidimensionnelle non orthogonale et les microcavités (3) possédant respectivement une largeur d'ouverture de 0,5 µm à 3 µm dans une direction spatiale parallèle au côté supérieur,
**caractérisé en ce que**
- une couche de recouvrement (18) transparente est appliquée sur la surface et au-dessus de la métallisation (21), laquelle égalise la structure à microcavités (1),
- un revêtement (15) qui génère un effet de couleur est disposé au-dessus de la structure à microcavités (1) sous la forme d'une première couche de cristaux liquides (19.1) appliquée au-dessus de la couche de recouvrement (18) et
- la structure à microcavités (1) est configurée de telle sorte qu'elle absorbe la lumière au moins dans certaines portions depuis le côté avant (V).

2. Élément de sécurité selon la revendication 1, **caractérisé en ce que** le type de grille est hexagonal ou octogonal.

3. Élément de sécurité selon la revendication 1 ou 2, **caractérisé en ce qu'**une deuxième couche de cristaux liquides (19.2) est présente sous la couche gaufrée (17) .

4. Élément de sécurité selon l'une des revendications précédentes, **caractérisé en ce qu'**un premier film porteur (20.1) transparent est appliqué au-dessus de la première couche de cristaux liquides (19.1) ou entre la première couche de cristaux liquides (19.1) et la couche de recouvrement (18).

5. Élément de sécurité selon l'une des revendications précédentes, **caractérisé en ce que** des microcavités (3) d'au moins un premier type et un deuxième type sont présentes pour la micrographie (12), lesquels se différencient du point de vue d'un rapport d'aspect des microcavités (3), la micrographie (12) étant ainsi structurée par les au moins deux types différents de microcavités (3).

6. Élément de sécurité selon l'une des revendications 1 à 5, **caractérisé en ce que** la structure à microcavités (1) présente un profil qui est, au moins dans certaines portions, symétrique à un plan central (M) qui se trouve entre le côté avant et le côté arrière (V, R).

7. Élément de sécurité selon l'une des revendications 1 à 6, **caractérisé en ce que**
- la structure à microcavités (1) possède des premières et des deuxièmes zones (7a, 7b), un profil de la structure à microcavités (1) dans les premières zones (7a) étant l'inverse du profil de la structure à microcavités (1) dans les deuxièmes zones (7b) et/ou
- une couche de diffusion de la lumière (26.1 ; 26.2) est présente au-dessus de la couche de cristaux liquides.

8. Élément de sécurité selon l'une des revendications 1 à 7, **caractérisé en ce que** le revêtement (15) ou le rapport d'aspect est structuré latéralement par la structure à microcavités (1), au moins dans certaines portions, de telle sorte que la structuration fournit un modèle ou un motif (12) reconnaissable à l'oeil nu.

9. Élément de sécurité selon l'une des revendications 1 à 8, **caractérisé en ce que** le revêtement (10) est une métallisation monocouche.

10. Document de valeur pourvu d'un élément de sécurité selon l'une des revendications 1 à 9.

11. Procédé de fabrication d'un élément de sécurité (10) pour des documents de valeur, comme des billets de banque, des chèques ou similaires, un substrat (2) étant fourni, lequel possède un côté supérieur et une micrographie (12) étant produite sur le côté supérieur (V),
- un corps multicouche étant produit avec le côté supérieur (V) et un côté inférieur (R), les étapes suivantes étant exécutées à cet effet :
-- une couche (17) transparente est fournie et une structure à microcavités (1) est gravée sans sa surface,
-- une métallisation (21) est appliquée au moins sur des parties de la surface de la couche gaufrée (17),
- la structure à microcavités (1) est formée avec une pluralité de microcavités (3) juxtaposées, les microcavités (3), vues de dessus, étant disposées sous la forme d'un type de grille bidimensionnelle non orthogonale et les microcavités (3) possédant respectivement une largeur d'ouverture de 0,5 µm à 3 µm dans une direction spatiale parallèle au côté supérieur,
**caractérisé en ce que**
- une couche de recouvrement (18) transparente est appliquée sur la surface et au-dessus de la métallisation (21), laquelle égalise la structure à microcavités (1),
- une première couche de cristaux liquides (19.1) sous la forme d'un revêtement (15) qui génère un effet de couleur est appliquée au-dessus de la couche de recouvrement (18) et
- la structure à microcavités (1) est configurée de telle sorte qu'elle absorbe la lumière au moins dans certaines portions depuis le côté avant (V).

12. Procédé selon la revendication 11, **caractérisé en ce que** le type de grille est hexagonal ou octogonal.

13. Procédé selon la revendication 11 ou 12, **caractérisé en ce qu'**une deuxième couche de cristaux liquides (19.2) est présente sous la couche gaufrée (17) .

14. Procédé selon l'une des revendications 11 à 13, **caractérisé en ce que** des microcavités (3) d'au moins un premier type et un deuxième type sont présentes pour la micrographie (12), lesquels se différencient par un rapport d'aspect des microcavités (3), la micrographie (12) étant ainsi structurée par les au moins deux types différents de microcavités (3).

15. Procédé selon l'une des revendications 11 à 14, **caractérisé en ce qu'**un premier film porteur (20.1) transparent est appliqué au-dessus de la première couche de cristaux liquides (19.1) ou un premier film porteur (20.1) transparent sur la couche de recouvrement (18) avant l'application de la première couche de cristaux liquides (19.1).

16. Procédé selon l'une des revendications 11 à 15, **caractérisé en ce que**
- la structure à microcavités (1) est pourvue d'un profil qui, au moins dans certaines portions, est configuré de manière symétrique par rapport à un plan central (M) qui se trouve entre le côté avant et le côté arrière (V, R) et/ou
- la structure à microcavités (1) est configurée avec des premières et des deuxièmes zones (7a, 7b) qui possèdent des profils inverses les unes des autres et/ou
- une couche de diffusion de la lumière (26.1 ; 26.2) est disposée au-dessus de la couche de cristaux liquides.

17. Procédé selon l'une des revendications 11 à 16, **caractérisé en ce que** le revêtement (15) ou la structure à microcavités (1) est structuré au moins dans certaines portions de telle sorte qu'un modèle ou un motif reconnaissable à l'oeil nu est fourni, une métallisation plane étant de préférence appliquée et ensuite de nouveau retirée dans certaines portions.

18. Procédé selon l'une des revendications 11 à 17, **caractérisé en ce que** le revêtement (10) est appliqué sous la forme d'une métallisation monocouche.
